# EUROPEAN PATENT SPECIFICATION

(11) **EP 4 292 418 B1**
(45) Date of publication and mention of the grant of the patent: **25.03.2026**
(21) Application number: 23175203.1
(22) Date of filing: 24.05.2023
(51) Int. Cl.: A01D 34/00

(54) **ELECTRIC WORK VEHICLE**
ELEKTRISCHES ARBEITSFAHRZEUG
VÉHICULE DE TRAVAIL ÉLECTRIQUE

(30) Priority: 14.06.2022 JP 2022095595
(43) Date of publication of application: 20.12.2023
(73) Proprietor: Kubota Corporation, Osaka-shi, Osaka 556-8601 (JP)
(72) Inventor: ITO, Hirokazu, SAKAI-SHI, OSAKA, 5900908 (JP); NAGAYAMA, Takashi, SAKAI-SHI, OSAKA, 5900908 (JP)
(74) Representative: Cabinet Beau de Loménie

(56) References cited:
- EP-A1- 2 702 850
- EP-A1- 3 406 127
- EP-A2- 2 639 128

## Description

### Technical Field

The present invention relates to an electric work vehicle configured to perform work while traveling. An example of the work vehicle includes: a drive wheel unit rotatable by a travel electric motor; a work device rotatable by a work electric motor; an operation detector configured to detect the position of a vehicle speed manual operation tool as operated; and a mode selector configured to select a work mode to be applied from among a plurality of work modes.

### Background Art

JP 2018-196354 A discloses a mower including: a drive wheel unit; a mower unit as a work device; a vehicle speed manual operation tool; a vehicle speed indicator value calculator configured to, on the basis of the position of the vehicle speed manual operation tool as operated, generate a vehicle speed indicator value (for example, a maximum vehicle speed value); a mode selector configured to select a control mode to be used from among a plurality of control modes each defining control parameters including a maximum vehicle speed value and a basic blade rotation speed value; a control table prepared for each control mode; a vehicle speed control target value calculator configured to calculate a vehicle speed control target value on the basis of the vehicle speed indicator value and the control table; a travel controller configured to control the drive wheel unit on the basis of the vehicle speed control target value; a blade control target value calculator configured to calculate a rotation speed control target value for each blade of the mower unit; and a work controller configured to control the number of revolutions of each blade of the mower unit on the basis of the rotation speed control target value.

Further electric work vehicles are e.g. known from EP 2 639 128 A2, EP 3 406 127 A1 and EP 2 702 850 A1.

### Summary of Invention

### Technical Problem

The mower of JP 2018-196354 A is configured to, in response to a maximum vehicle speed value being calculated from the detected rotation speed of each blade, set a control table including the maximum vehicle speed value. The mower refers to the control table to calculate a vehicle speed control target value corresponding to the position of the vehicle speed manual operation tool as operated, and provides the vehicle speed control target value to the travel controller. During this operation, the mower calculates a basic blade rotation speed in accordance with the load on the blade motor, changes the rotation speed control target value, and provides the resulting rotation speed control target value to the work controller. The mower has a basic blade rotation speed and maximum vehicle speed value defined for each control mode. The mower changes the vehicle speed control target value in accordance with the detected value of the blade rotation speed and selects a control table suitable for the resulting vehicle speed control target value.

Work vehicles such as mowers should preferably be configured such that the worker (driver) is able to freely select the vehicle speed on the basis of such factors as the type of work and the work area. The mower of JP 2018-196354 A is, however, configured to travel and perform work under control such that the vehicle speed is within a range that is limited in accordance with the rotation speed of each blade and that is based on the maximum vehicle speed. In view of the above circumstances, it is an object of the present invention to provide an electric work vehicle that allows a person to select the vehicle speed and the rotation speed of a work device reasonably in accordance with such factors as the type of work and the work area.

### Solution to Problem

An electric work vehicle according to the present invention is defined in claim 1.

A work vehicle includes:
a drive wheel unit rotatable by a travel electric motor; a work device rotatable by a work electric motor; a vehicle speed manual operation tool operable to change a vehicle speed of the electric work vehicle; and a control unit including: a mode selector configured to select a work mode to be applied from among a plurality of work modes each defining a rotation speed for the work device relative to the vehicle speed; a control target value calculator configured to, based on an amount of operation of the vehicle speed manual operation tool and the work mode having been selected, calculate a vehicle speed target value for the travel electric motor and a rotation speed target value for the work electric motor; a travel controller configured to control the travel electric motor based on the vehicle speed target value; and a work controller configured to control the work electric motor based on the rotation speed target value.

The above configuration allows the driver to change the vehicle speed of the electric work vehicle with use of the vehicle speed manual operation tool. The driver can select a work mode to be applied from among a plurality of work modes each defining a rotation speed for the work device relative to the vehicle speed. The electric work vehicle, in response, selects the vehicle speed and the work speed on the basis of the amount of operation of the vehicle speed manual operation tool and the work mode having been selected. This means that the driver can simply select a work mode in accordance with such factors as the work details and the work area to cause the electric work vehicle to travel and perform work appropriately, as the work mode appropriately defines in advance a relationship between the vehicle speed and the work speed. The inventive configuration eliminates the need for the driver to skillfully adjust separate operation tools for the vehicle speed and the work speed to cause the electric work vehicle to travel and perform work.

In causing an electric work vehicle to perform lawn mowing, tillage, or the like while traveling, the operator will want such work modes as (i) a low-power mode in which an electric motor is driven to rotate at a low speed to allow the electric work vehicle to quietly travel and perform work over an long time period, (ii) an automatic low-power mode that enables adjustment of the work rotation speed and the vehicle speed in view of the work load, (iii) an automatic high-power mode that prioritizes work with a higher work efficiency, and (iv) a high-power mode in which to finish work in a short time period with the maximum power.

The inventive electric work vehicle may be configured, in correspondence with the above work modes, such that the plurality of work modes include a first work mode (low-power mode), a second work mode (automatic low-power mode), a third work mode (automatic high-power mode), and a fourth work mode (high-power mode).

In the first work mode, the control unit keeps the rotation speed at a first constant rotation speed as a low speed over the entire range of the vehicle speed; in the second work mode, the control unit keeps the rotation speed at a first low rotation speed as a low speed over a first low vehicle speed range and increases the rotation speed in stages or continuously to a first high rotation speed in response to an increase in the vehicle speed over a first high vehicle speed range as a range of vehicle speeds higher than in the first low vehicle speed range; in the third work mode, the control unit keeps the rotation speed at a second low rotation speed as a low speed over a second low vehicle speed range and increases the rotation speed in stages or continuously to a second high rotation speed higher than the first high rotation speed in response to an increase in the vehicle speed over a second high vehicle speed range as a range of vehicle speeds higher than in the second low vehicle speed range; and in the fourth work mode, the control unit keeps the rotation speed at a second constant rotation speed equal to or higher than the second high rotation speed over the entire range of the vehicle speed.

In other words, in the first work mode, the control unit keeps the rotation speed at a first constant rotation speed as a low speed over an entire range of the vehicle speed; in the second work mode, the control unit keeps the rotation speed at a first low rotation speed as a low speed over a first low vehicle speed range and at a first high rotation speed higher than the first low rotation speed over a first high vehicle speed range as a range of vehicle speeds higher than in the first low vehicle speed range, and changes the rotation speed in stages or continuously between the first low rotation speed and the first high rotation speed in response to a change in the vehicle speed over a first intermediate vehicle speed range between the first low vehicle speed range and the first high vehicle speed range; in the third work mode, the control unit keeps the rotation speed at a second low rotation speed as a low speed over a second low vehicle speed range and at a second high rotation speed higher than the second low rotation speed over a second high vehicle speed range as a range of vehicle speeds higher than in the second low vehicle speed range, and changes the rotation speed in stages or continuously between the second low rotation speed and the second high rotation speed in response to a change in the vehicle speed over a second intermediate vehicle speed range between the second low vehicle speed range and the second high vehicle speed range; and in the fourth work mode, the control unit keeps the rotation speed at a second constant rotation speed equal to or higher than the second high rotation speed over the entire range of the vehicle speed.

This configuration allows the driver to simply select a work mode suitable for the purpose and environment of the work such as the type and place of the work to cause the electric work vehicle to travel and perform work reasonably.

The second and third work modes each automatically select a rotation speed for the work device which rotation speed is suitable for the vehicle speed in an eco-friendly manner while allowing the driver to cause the electric work vehicle to travel and perform work as the driver intends. Further, the second and third work modes each have an intermediate vehicle speed range over which the work rotation speed varies according to the vehicle speed. The rotation speed should advantageously change smoothly in response to a change in the vehicle speed over the intermediate vehicle speed range. In view of that, the present invention may be configured such that in either or both of the second and third work modes, the control unit changes the rotation speed continuously in a linear or nonlinear manner in response to a change in the vehicle speed over either or both of the first and second intermediate vehicle speed ranges. Further, since the work condition varies between when the vehicle speed increases and when the vehicle speed decreases, the relationship between the vehicle speed and the work rotation speed should also advantageously vary between the two cases. In view of that, the present invention may be configured such that in the second and third work modes, the control unit changes the rotation speed with hysteresis in at least a portion of the change in the rotation speed over the first and second intermediate vehicle speed ranges.

The first and fourth work modes each keep a constant rotation speed regardless of the vehicle speed. The present invention may be configured such that the first low vehicle speed range coincides with the second low vehicle speed range, and the second low rotation speed is equal to or higher than the first low rotation speed. This allows the driver to select the first work mode, in which the electric work vehicle travels and performs work while constantly consuming the minimum level of power to remain silent and allow the battery to last a long time period, and the fourth work mode, in which the electric work vehicle travels and performs work while constantly consuming the maximum level of power to finish heavy work in a short time period. In either work mode, the driver can operate the electric work vehicle similarly and can thereby easily cause the electric work vehicle to travel and perform work.

The electric work vehicle may, while traveling and performing work, experience a sudden increase in the work load and hence a heavy load on the electric motor. Such a heavy load will, if persistent, damage the work device and the electric motor. The electric work vehicle can avoid such damage by decreasing either the rate of the rotation of the electric motor, that is, the speed of the rotation of the work device, or the vehicle speed. In view of that, the present invention may further include a work load detector configured to detect a motor load on the work electric motor, wherein the work load detector decreases either or both of the rotation speed and the vehicle speed in response to the motor load increasing over a predetermined value.

### Brief Description of Drawings

Fig. 1 is a side view of an electric mower in its entirety as an example electric work vehicle.
Fig. 2 is a plan view of an electric mower in its entirety.
Fig. 3 is a plan view of an instrument panel.
Fig. 4 is a diagram schematically illustrating the power system and control system of an electric mower.
Fig. 5 is a functional block diagram illustrating control function sections of a control unit.
Fig. 6 is a graph illustrating how the vehicle speed and the work rotation speed are related to each other in each work mode.
Fig. 7 is a functional block diagram illustrating a control system for controlling the vehicle speed and the work rotation speed.

### Description of Embodiments

Unless otherwise stated, the present specification uses (i) the word "forward" to refer to a front side of the front-back direction (traveling direction) of the body, (ii) the word "rearward" to refer to a back side of the front-back direction (traveling direction) of the body, (iii) the terms "left-right direction" and "lateral direction" to refer to the transverse direction (width direction) of the body, which is orthogonal to the front-back direction of the body, and (iv) the words "upward" and "downward" to refer to a position in the vertical direction of the body, that is, a height from the ground. The drawings show "F" to indicate "forward", "B" to indicate "backward", "L" to indicate "left", "R" to indicate "right", "U" to indicate "upward", and "D" to indicate "downward".

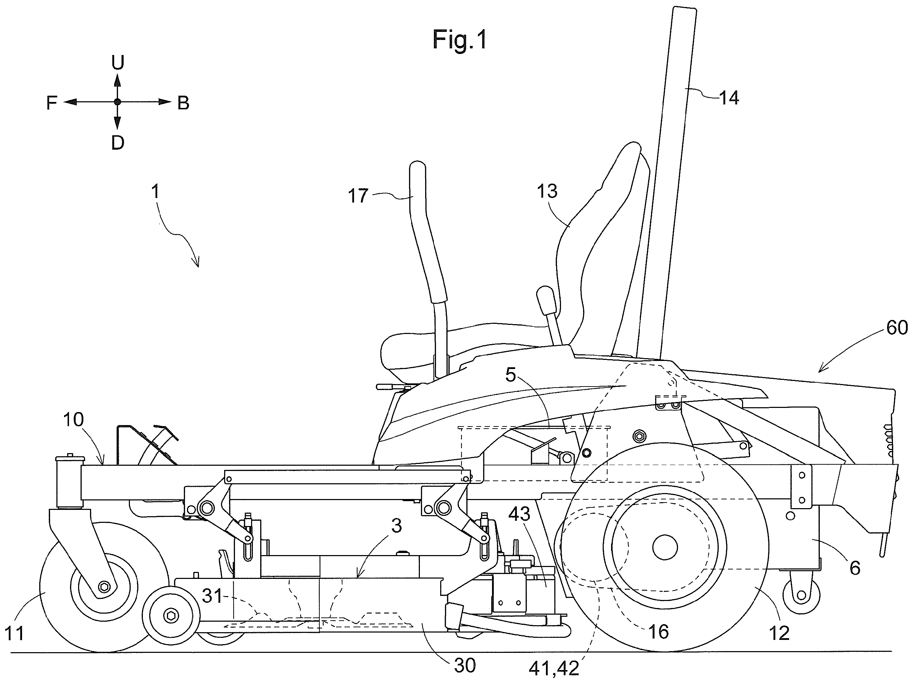

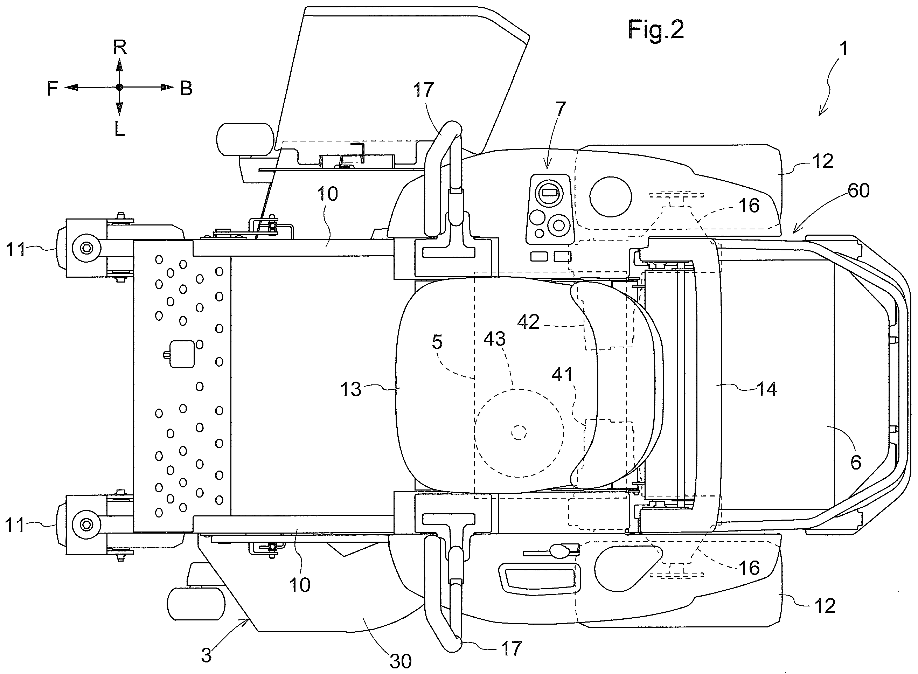

The description below deals with an electric work vehicle, namely an electric mower, as an embodiment of the present invention. The electric mower, as illustrated in Figs. 1 and 2, includes a body 1, a pair of left and right front wheels 11, a pair of left and right rear wheels 12, and a mower unit 3. The front wheels 11 are held by a front portion of the body 1. The rear wheels 12 are held by a back portion of the body 1 and serve as a drive wheel unit. The mower unit 3 is held by a lower portion of the body 1 between the front wheels 11 and the rear wheels 12, and serves as a work device. The electric mower also includes a battery 6 and a battery container 60 disposed between the left and right rear wheels 12 and containing the battery 6. The body 1 is provided with a driver's seat 13 and a ROPS frame 14 (rollover protection structure).

The body 1 includes a frame 10 including a pair of left and right longitudinal beams extending in the front-back direction and a cross beam coupling the two longitudinal beams to each other. The ROPS frame 14 has lower ends coupled to the frame 10.

The front wheels 11 are caster wheels, whereas the rear wheels 12 are drive wheels. The electric mower includes a left travel motor 41 and a right travel motor 42 each as a travel electric motor. The left and right travel motors 41 and 42 are disposed inward of the respective rear wheels 12 and configured to transmit motive power to the respective rear wheels 12 through respective deceleration mechanisms 16 to drive the respective rear wheels 12 independently of each other.

The electric mower includes a pair of left and right shift levers 17 on opposite sides of the driver's seat 13 each as a vehicle speed manual operation tool for changing the vehicle speed. Moving the right shift lever 17 to the neutral position causes the right travel motor 42 to stop. Moving the right shift lever 17 to the forward travel side causes the right travel motor 42 to rotate to the forward travel side. Moving the right shift lever 17 to the backward travel side causes the right travel motor 42 to rotate to the backward travel side. Moving the left shift lever 17 to the neutral position, the forward travel side, or the backward travel side causes the left travel motor 41 to operate similarly to the right travel motor 42. Moving the right and left shift levers 17 drives the right and left rear wheels 12 independently of each other to the forward travel side or the backward travel side, so that the electric mower moves forward or backward or turns to the right or left.

As illustrated in Fig. 1, the mower unit 3 includes a mower deck 30 and two blades 31 each disposed inside the mower deck 30 in such a manner as to be rotatable about a vertical axis. The electric mower includes a mower motor 43 configured to drive the blades 31 to rotate and a link mechanism 34 suspending the mower deck 30 from the frame 10 in such a manner that the mower deck 30 is capable of being lifted and lowered.

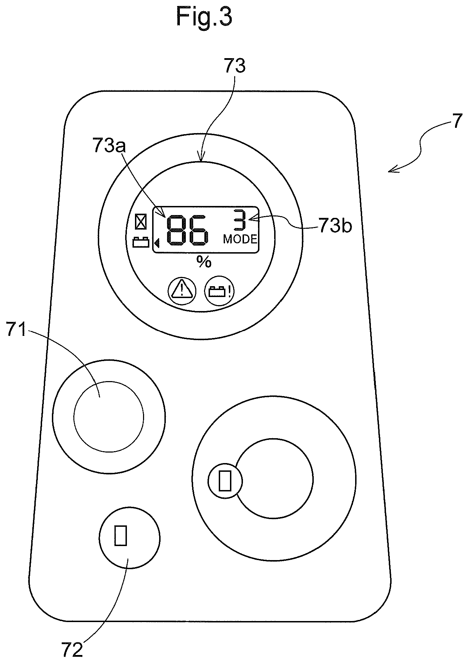

The electric mower includes an instrument panel 7 as illustrated in Fig. 3 to the left of the driver's seat 13. The instrument panel 7 includes a mower activation button 71, a work mode selection button 72, and a display panel 73 as elements particularly relevant to the present invention. The mower activation button 71 is an operation tool for operating the mower unit 3. Pulling up the mower activation button 71 activates the mower unit 3, whereas pressing down the mower activation button 71 deactivates the mower unit 3. The work mode selection button 72 is an operation tool for selecting a work mode (detailed later). The present embodiment is configured such that pressing the work mode selection button 72 sequentially selects one of the four different work modes to be applied. The display panel 73 includes a remaining battery power displaying section 73a for displaying how much power remains in the battery 6 and a work mode displaying section 73b for displaying the effective work mode selected with use of the work mode selection button 72. The instrument panel 7 also includes notification devices (not illustrated in the drawings) configured to notify the driver visually and/or audibly of other various items of information.

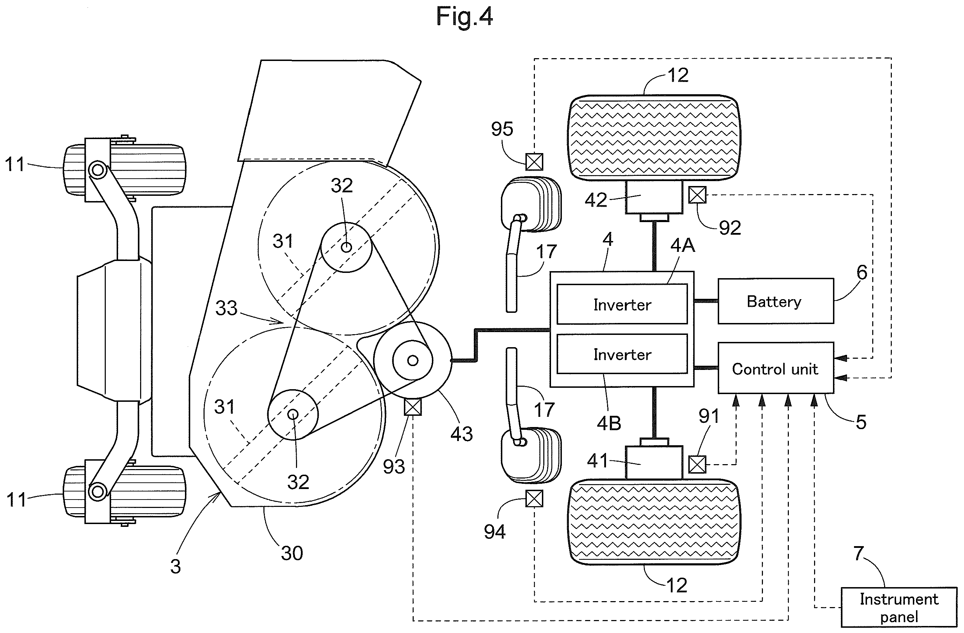

Fig. 4 illustrates the power system and control system of the electric mower. The mower motor 43 as a work electric motor is disposed on a back wall of the mower deck 30, and configured to rotate, with use of a belt-based power transmission mechanism 33, two rotary shafts 32 to which the respective blades 31 are attached. The left travel motor 41 serves as a travel electric motor configured to rotate the left rear wheel 12, whereas the right travel motor 42 serves as a travel electric motor configured to rotate the right rear wheel 12.

The electric mower includes an inverter unit 4 and a control unit 5. The inverter unit 4 is configured to feed electric power to the left and right travel motors 41 and 42 and the mower motor 43. The inverter unit 4 includes an inverter 4A configured to feed electric power to the left and right travel motors 41 and 42 and an inverter 4B configured to feed electric power to the mower motor 43. The inverter unit 4 is drivable on the basis of a control signal from the control unit 5. The inverter unit 4 is connected to the battery 6 as an electric power source.

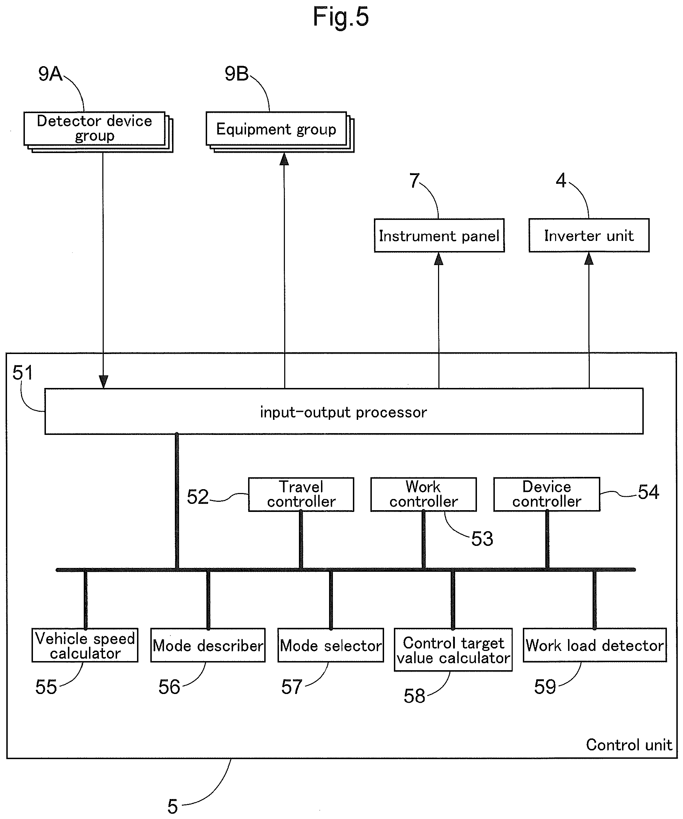

As illustrated in Fig. 5, the control unit 5 includes the following control function sections: an input-output processor 51, a travel controller 52, a work controller 53, a device controller 54, a vehicle speed calculator 55, a mode describer 56, a mode selector 57, a control target value calculator 58, and a work load detector 59.

The input-output processor 51 is connected to a detector device group 9A, an equipment group 9B, the instrument panel 7, and the inverter unit 4. The detector device group 9A includes sensors (such as potentiometers) illustrated in Fig. 4 such as a left travel motor sensor 91 configured to detect the rotation speed of the left travel motor 41, a right travel motor sensor 92 configured to detect the rotation speed of the right travel motor 42, a mower motor sensor 93 configured to detect the rotation speed of the mower motor 43, a left shift sensor 94 configured to detect the amount of operation of the left shift lever 17, and a right shift sensor 95 configured to detect the amount of operation of the right shift lever 17. The equipment group 9B includes lights and a buzzer.

The device controller 54 is configured to manage how the instrument panel 7 and the equipment group 9B operate and to convert, into notification signals, various items of information of which the driver should be notified and transmit the notification signals to, for example, various notification devices.

The vehicle speed calculator 55 is configured to calculate the vehicle speed, that is, the speed at which the electric mower is traveling. The vehicle speed calculator 55 for the present embodiment calculates the vehicle speed from the amount of operation of the left shift lever 17 as detected by the left shift sensor 94 and the amount of operation of the right shift lever 17 as detected by the right shift sensor 95. The vehicle speed calculator 55 may alternatively calculate the vehicle speed from the rotation speed of the left travel motor 41 as detected by the left travel motor sensor 91 and the rotation speed of the right travel motor 42 as detected by the right travel motor sensor 92. The vehicle speed calculator 55 may further alternatively calculate the vehicle speed with use of another vehicle speed detector.

The mode describer 56 is configured to store, edit, and manage a plurality of work modes each defining the rotation speed of the work device relative to the vehicle speed. The mode describer 56 stores information on the work modes in tabular form. The work modes for the present embodiment are first to fourth work modes. The first work mode is a low-power mode in which the mower motor 43 is driven to rotate at a low speed to allow the electric mower to quietly travel and perform work over a long time period. The second work mode is an automatic low-power mode that enables adjustment of the work rotation speed and the vehicle speed in view of the work load. The third work mode is an automatic high-power mode that prioritizes work with a work efficiency higher than in the automatic low-power mode. The fourth work mode is a high-power mode in which to finish work in a short time period with the maximum power.

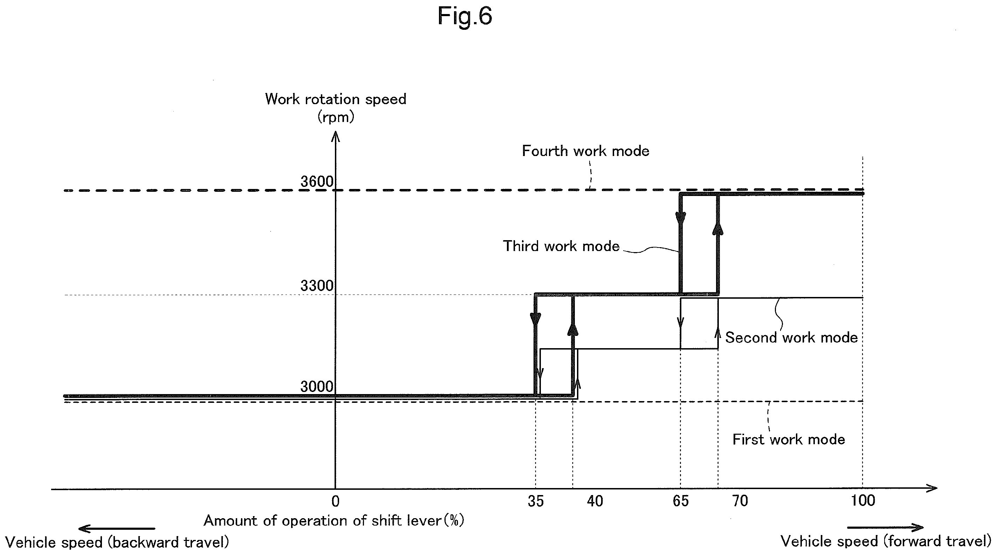

The work modes each have a vehicle speed and a work rotation speed (that is, a blade rotation speed) in a relationship graphically represented in Fig. 6, which shows a thin dashed line to indicate the first work mode, a thin solid line to indicate the second work mode, a thick solid line to indicate the third work mode, and a thick dashed line to indicate the fourth work mode. The graph of Fig. 6 has a vertical axis indicative of the work rotation speed (that is, the rotation speed of the mower motor 43) in rpm and a horizontal axis indicative of the amount of operation of a vehicle speed manual operation tool (that is, each shift lever 17) with 0% corresponding to the position at which the vehicle speed is zero and 100% corresponding to the position at which the vehicle speed is the highest. The left side of 0% corresponds to work during backward travel, whereas the right side of 0% corresponds to work during forward travel.

In the first work mode, the control unit 5 keeps the rotation speed at a first constant rotation speed (for example, 3000 rpm) as a low rotation speed over the entire vehicle speed range.

In the second work mode, the control unit 5 keeps the rotation speed at (i) a first low rotation speed (for example, 3000 rpm) as a low speed over a first low vehicle speed range and at (ii) a first high rotation speed (for example, 3300 rpm) as a speed higher than the first low rotation speed over a first high vehicle speed range as a range of vehicle speeds higher than in the first low vehicle speed range. The control unit 5, in the second work mode, changes the rotation speed in stages (in the example illustrated in Fig. 6, in two stages) in response to a change in the vehicle speed over a first intermediate vehicle speed range between the first low vehicle speed range and the first high vehicle speed range. With reference to the graph of Fig. 6, the control unit 5 increases the rotation speed to the first high rotation speed (for example, 3300 rpm) in stages (namely, in two stages) in response to an increase in the vehicle speed. At the first stage, the control unit 5 increases the rotation speed to an intermediate rotation speed (for example, 3150 rpm) between the first low rotation speed and the first high rotation speed.

In the third work mode, the control unit 5 keeps the rotation speed at (i) a second low rotation speed (for example, 3000 rpm) as a low speed over a second low vehicle speed range and at (ii) a second high rotation speed as a speed higher than the second low rotation speed over a second high vehicle speed range as a range of vehicle speeds higher than in the second low vehicle speed range. The control unit 5, in the third work mode, changes the rotation speed in stages (in the example illustrated in Fig. 6, in two stages) in response to a change in the vehicle speed over a second intermediate vehicle speed range between the second low vehicle speed range and the second high vehicle speed range. With reference to the graph of Fig. 6, the control unit 5 increases the rotation speed to the second high rotation speed (for example, 3600 rpm), which is higher than the first high rotation speed, in stages (namely, in two stages) in response to an increase in the vehicle speed. At the first stage, the control unit 5 increases the rotation speed to an intermediate rotation speed (for example, 3300 rpm) between the second low rotation speed and the second high rotation speed.

In either or both of the second and third work modes, the control unit 5 may alternatively increase the work rotation speed in more than two stages or even continuously in a linear or nonlinear manner in response to a change in the vehicle speed over either or both of the first and second intermediate vehicle speed ranges.

The lines indicative of the second and third work modes in Fig. 6 show hysteresis in an increase and decrease in the work rotation speed relative to the vehicle speed within the first and second intermediate vehicle speed ranges. Specifically, the lines each indicate an increase from the first or second low rotation speed to the intermediate rotation speed with the amount of operation of each shift lever 17 (which indicates the vehicle speed) at approximately 38%, whereas the lines each indicate a decrease from the intermediate rotation speed to the first or second low rotation speed with the amount of operation of each shift lever 17 at approximately 35%. The lines show similar hysteresis for the transition from the intermediate rotation speed to the first or second high rotation speed. The hysteresis may occur at different vehicle speeds between the first and second intermediate vehicle speed ranges.

In the fourth work mode, the control unit 5 keeps the work rotation speed at a second constant rotation speed (in this example, 3600 rpm) equal to or higher than the second high rotation speed over the entire vehicle speed range.

The mode selector 57 is configured to select a work mode to be applied from among the above work modes on the basis of the operation of the work mode selection button 72.

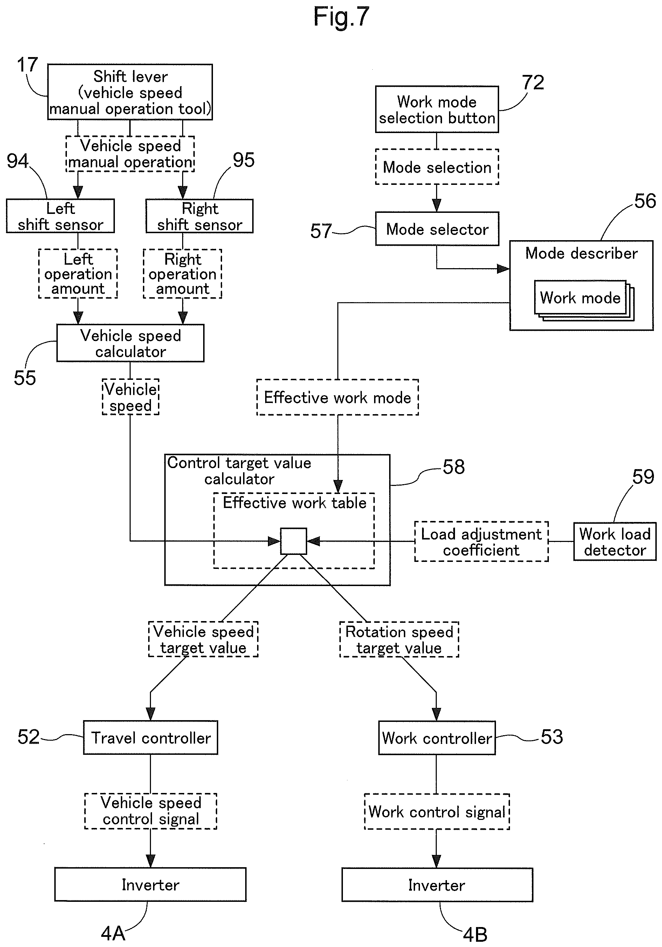

The control target value calculator 58 is configured to, as illustrated in the control flow diagram of Fig. 7, calculate (i) a vehicle speed target value indicative of a target rotation speed for each of the left and right travel motors 41 and 42 and (ii) a rotation speed target value for the mower motor 43. The control target value calculator 58 performs this calculation on the basis of the vehicle speed calculated by the vehicle speed calculator 55, that is, the amount of operation of each shift lever 17, and a work table defined by the effective work mode selected by the mode selector 57.

The travel controller 52 is configured to generate a vehicle speed control signal on the basis of the vehicle speed target value and transmit the vehicle speed control signal to the inverter 4A, which in turn controls how the left and right travel motors 41 and 42 are driven, on the basis of the vehicle speed control signal. The travel controller 52 is, in other words, configured to control how the left and right travel motors 41 and 42 are driven, on the basis of the amount of operation of each shift lever 17.

The work load detector 59 is configured to detect the motor load on the work electric motor and reduce the load in response to the motor load increasing over a predetermined value. The load reduction includes decreasing either or both of the rotation speed of the work electric motor and the vehicle speed in response to the motor load increasing over the predetermined value. The work load detector 59 in the example illustrated in Fig. 7 is configured to generate a load adjustment coefficient in response to the motor load increasing over a predetermined value and provide the load adjustment coefficient to the control target value calculator 58, which in turn decreases the vehicle speed target value or the rotation speed target value with use of the load adjustment coefficient.

The work controller 53 is configured to generate a work control signal on the basis of the rotation speed target value and transmit the work control signal to the inverter 4B, which in turn controls how the mower motor 43 is driven, on the basis of the work control signal. The work controller 53 is, in other words, configured to control how the mower motor 43 is driven in accordance with the effective work mode, on the basis of the amount of operation of each shift lever 17.

### Alternative Embodiments

(1) The graph of Fig. 6 shows a relationship between the amount of operation of each shift lever 17 and the rotation speed of the mower motor 43 (that is, the work rotation speed). The graph may be changed to show, on the vertical and horizontal axes, line shapes and numerical values that vary depending on such factors as the work details and the work place.
(2) The embodiment described above is an electric mower as an electric work vehicle. The power system described above may alternatively be mounted in other electric work machines, electrically operated tractors, electrically operated harvesters, and electrically operated construction machines.

The arrangements disclosed for the above embodiments (including the alternative embodiments; hereinafter the same applies) may each be combined with an arrangement disclosed for another embodiment, as long as such a combination does not cause a contradiction. Further, the embodiments disclosed in the present specification are mere examples. The present invention is defined by the appended claims.

The present invention is applicable to electric work vehicles drivable with use of a battery.

## Claims

1. An electric work vehicle, comprising:
a drive wheel unit (11, 12) rotatable by a travel electric motor (41, 42); a work electric motor (43);
a work device (3) rotatable by the work electric motor (43);
a vehicle speed manual operation tool (17) operable to change a vehicle speed of the electric work vehicle; and
a control unit (5) including:
a mode selector (57) configured to select a work mode to be applied from among a plurality of work modes each defining a rotation speed for the work device (3) relative to the vehicle speed;
a control target value calculator (58) configured to, based on an amount of operation of the vehicle speed manual operation tool (17) and the work mode having been selected, calculate a vehicle speed target value for the travel electric motor (41, 42) and a rotation speed target value for the work electric motor (43);
a travel controller (52) configured to control the travel electric motor (41, 42) based on the vehicle speed target value; and
a work controller (53) configured to control the work electric motor (43) based on the rotation speed target value,
the plurality of work modes including at least one work mode in which the control unit (5) is configured to keep the rotation speed at a first low rotation speed as a low speed over a first low vehicle speed range,
**characterized in that**
in the at least one work mode the control unit (5) is further configured to keep the rotation speed at a first high rotation speed higher than the first low rotation speed over a first high vehicle speed range as a range of vehicle speeds higher than in the first low vehicle speed range, and
the control unit (5) is further configured to change the rotation speed in stages or continuously between the first low rotation speed and the first high rotation speed in response to a change in the vehicle speed over a first intermediate vehicle speed range between the first low vehicle speed range and the first high vehicle speed range.

2. The electric work vehicle according to claim 1, wherein
the plurality of work modes include a first work mode, a second work mode, a third work mode, and a fourth work mode, wherein the at least one work mode is the second work mode, and wherein
in the first work mode, the control unit (5) is configured to keep the rotation speed at a first constant rotation speed as a low speed over an entire range of the vehicle speed;
in the third work mode, the control unit (5) is configured to keep the rotation speed at a second low rotation speed as a low speed over a second low vehicle speed range and at a second high rotation speed higher than the second low rotation speed and the first high rotation speed over a second high vehicle speed range as a range of vehicle speeds higher than in the second low vehicle speed range, and
is configured to change the rotation speed in stages or continuously between the second low rotation speed and the second high rotation speed in response to a change in the vehicle speed over a second intermediate vehicle speed range between the second low vehicle speed range and the second high vehicle speed range; and
in the fourth work mode, the control unit (5) is configured to keep the rotation speed at a second constant rotation speed equal to or higher than the second high rotation speed over the entire range of the vehicle speed.

3. The electric work vehicle according to claim 2, wherein
in either or both of the second and third work modes, the control unit (5) is configured to change the rotation speed continuously in a linear or nonlinear manner over either or both of the first and second intermediate vehicle speed ranges.

4. The electric work vehicle according to claim 2, wherein
in the second and third work modes, the control unit (5) is configured to change the rotation speed with hysteresis in at least a portion of the change in the rotation speed over the first and second intermediate vehicle speed ranges.

5. The electric work vehicle according to claim 2, wherein
the first low vehicle speed range coincides with the second low vehicle speed range, and
the second high rotation speed is higher than the first high rotation speed.

6. The electric work vehicle according to any one of claims 1 to 5, further comprising:
a work load detector (59) configured to detect a motor load on the work electric motor (43), wherein
the work load detector (59) is configured to decrease either or both of the rotation speed and the vehicle speed in response to the motor load increasing over a predetermined value.

## Patentansprüche

1. Elektrisches Arbeitsfahrzeug, umfassend:
eine Antriebsradeinheit (11, 12), die von einem elektrischen Fahrmotor (41, 42) gedreht werden kann;
einen elektrischen Arbeitsmotor (43);
eine Arbeitsvorrichtung (3), die vom elektrischen Arbeitsmotor (43) gedreht werden kann;
ein manuelles Fahrzeuggeschwindigkeits-Bedienelement (17), das betätigt werden kann, um eine Fahrzeuggeschwindigkeit des elektrischen Arbeitsfahrzeugs zu ändern; und
eine Steuereinheit (5), darin eingeschlossen:
einen Moduswähler (57), der konfiguriert ist, um einen Arbeitsmodus, der angewendet werden soll, aus einer Vielzahl von Arbeitsmodi auszuwählen; wobei jeder eine Drehzahl für die Arbeitsvorrichtung (3) relativ zur Fahrzeuggeschwindigkeit definiert;
einen Sollwertsteuerungsrechner (58) der konfiguriert ist, um basierend auf einem Grad der Bedienung des manuellen Fahrzeuggeschwindigkeits-Bedienelements (17) und dem Arbeitsmodus, der ausgewählt wurde, einen Fahrzeuggeschwindigkeits-Sollwert für den elektrischen Fahrmotor (41, 42) und einen Drehzahl-Sollwert für den elektrischen Arbeitsmotor (43) zu berechnen;
eine Fahrsteuerung (52), die konfiguriert ist, um den elektrischen Fahrmotor (41, 42) basierend auf dem Fahrzeuggeschwindigkeits-Sollwert zu steuern; und
eine Arbeitssteuerung (53), die konfiguriert ist, um den elektrischen Arbeitsmotor (43) basierend auf dem Drehzahl-Sollwert zu steuern,
wobei die Vielzahl von Arbeitsmodi mindestens einen Arbeitsmodus beinhaltet, in dem die Steuereinheit (5) konfiguriert ist, um die Drehzahl bei einer ersten niedrigen Drehzahl als einer niedrigen Drehzahl über einem ersten niedrigen Fahrzeuggeschwindigkeitsbereich zu halten;
**dadurch gekennzeichnet, dass**
in dem mindestens einen Arbeitsmodus die Steuereinheit (5) weiter konfiguriert ist, um die Drehzahl bei einer ersten hohen Drehzahl, die höher als die erste niedrige Drehzahl ist, über einem ersten hohen Fahrzeuggeschwindigkeitsbereich als einem Bereich von Fahrzeuggeschwindigkeiten zu halten, die höher als im ersten niedrigen Fahrzeuggeschwindigkeitsbereich sind, und
die Steuereinheit (5) weiter konfiguriert ist, um die Drehzahl stufenweise oder kontinuierlich zwischen der ersten niedrigen Drehzahl und der ersten hohen Drehzahl in Reaktion auf eine Änderung der Fahrzeuggeschwindigkeit über einen ersten mittleren Fahrzeuggeschwindigkeitsbereich zwischen der ersten niedrigen Fahrzeuggeschwindigkeit und der ersten hohen Fahrzeuggeschwindigkeit zu ändern.

2. Elektrisches Arbeitsfahrzeug nach Anspruch 1, wobei die Vielzahl von Arbeitsmodi einen ersten Arbeitsmodus, einen zweiten Arbeitsmodus, einen dritten Arbeitsmodus und eine vierten Arbeitsmodus beinhaltet, wobei der mindestens ein Arbeitsmodus der zweite Arbeitsmodus ist, und wobei
im ersten Arbeitsmodus die Steuereinheit (5) konfiguriert ist, um die Drehzahl über einen gesamten Bereich der Fahrzeuggeschwindigkeit bei einer ersten konstanten Drehzahl als einer niedrigen Drehzahl zu halten;
im dritten Arbeitsmodus die Steuereinheit (5) konfiguriert ist, um die Drehzahl bei einer zweiten niedrigen Drehzahl als einer niedrigen Drehzahl über einem zweiten niedrigen Fahrzeuggeschwindigkeitsbereich und bei einer zweiten hohen Drehzahl, die höher als die zweite niedrige Drehzahl und die erste hohe Drehzahl über einem zweiten hohen Fahrzeuggeschwindigkeitsbereich als einem Bereich von Fahrzeuggeschwindigkeiten, der höher als im zweiten niedrigen Fahrzeuggeschwindigkeitsbereich ist, zu halten und konfiguriert ist, um die Drehzahl stufenweise oder kontinuierlich zwischen der zweiten niedrigen Drehzahl und der zweiten hohen Drehzahl in Reaktion auf eine Änderung der Fahrzeuggeschwindigkeit über einen zweiten mittleren Fahrzeuggeschwindigkeitsbereich zwischen dem zweiten niedrigen Fahrzeuggeschwindigkeitsbereich und dem zweiten hohen Fahrzeuggeschwindigkeitsbereich zu ändern; und
im vierten Arbeitsmodus die Steuereinheit (5) konfiguriert ist, um die Drehzahl bei einer zweiten konstanten Drehzahl, die gleich oder höher als die zweite hohe Drehzahl ist, über dem gesamten Bereich der Fahrzeuggeschwindigkeit zu halten.

3. Elektrisches Arbeitsfahrzeug nach Anspruch 2, wobei
in einem oder beiden des zweiten und dritten Arbeitsmodus die Steuereinheit (5) konfiguriert ist, um die Drehzahl kontinuierlich auf eine lineare oder nicht lineare Weise über einen oder beide des ersten und zweiten Zwischenfahrzeuggeschwindigkeitsbereichs zu ändern.

4. Elektrisches Arbeitsfahrzeug nach Anspruch 2, wobei
im zweiten und dritten Arbeitsmodus die Steuereinheit (5) konfiguriert ist, um die Drehzahl mit Hysterese in mindestens einem Abschnitt der Änderung der Drehzahl über den ersten und zweiten Zwischenfahrzeuggeschwindigkeitsbereich zu ändern.

5. Elektrisches Arbeitsfahrzeug nach Anspruch 2, wobei
der erste niedrige Fahrzeuggeschwindigkeitsbereich mit dem zweiten niedrigen Fahrzeuggeschwindigkeitsbereich übereinstimmt und die zweite hohe Drehzahl höher als die erste hohe Drehzahl ist.

6. Elektrisches Arbeitsfahrzeug nach einem der Ansprüche 1 bis 5, weiter umfassend:
einen Arbeitslastdetektor (59), der konfiguriert ist, um eine Motorlast auf dem elektrischen Arbeitsmotor (43) zu erfassen,
wobei der Arbeitslastdetektor (59) konfiguriert ist, um eines oder beide der Drehzahl und der Fahrzeuggeschwindigkeit in Reaktion darauf zu verringern, dass sich die Motorlast über einen vorbestimmten Wert erhöht.

## Revendications

1. Véhicule de travail électrique, comprenant :
une unité de roues motrices (11, 12) qui peuvent être entraînées en rotation par un moteur électrique de déplacement (41, 42) ;
un moteur électrique de travail (43) ;
un dispositif de travail (3) qui peut être entraîné en rotation par le moteur électrique de travail (43) ;
un élément de commande manuelle de vitesse du véhicule (17) qui peut être actionné pour changer une vitesse du véhicule de travail électrique ; et
une unité de commande (5) comportant :
un sélecteur de mode (57) configuré pour sélectionner un mode de travail à appliquer parmi une pluralité de modes de travail définissant chacun une vitesse de rotation pour le dispositif de travail (3) par rapport à la vitesse du véhicule ;
un calculateur de valeur cible de commande (58) configuré pour, sur la base d'un degré d'actionnement de l'élément de commande manuelle de vitesse du véhicule (17) et du mode de travail ayant été sélectionné, calculer une valeur cible de vitesse du véhicule pour le moteur électrique de déplacement (41, 42) et une valeur cible de vitesse de rotation pour le moteur électrique de travail (43) ;
un dispositif de commande de déplacement (52) configuré pour commander le moteur électrique de déplacement (41, 42) sur la base de la valeur cible de vitesse du véhicule ; et
un dispositif de commande de travail (53) configuré pour commander le moteur électrique de travail (43) sur la base de la valeur cible de vitesse de rotation,
la pluralité de modes de travail comportant au moins un mode de travail dans lequel l'unité de commande (5) est configurée pour maintenir la vitesse de rotation à une première vitesse de rotation faible sur une première plage de vitesses faibles de véhicule,
**caractérisé en ce que**
dans l'au moins un mode de travail, l'unité de commande (5) est en outre configurée pour maintenir la vitesse de rotation à une première vitesse de rotation élevée supérieure à la première vitesse de rotation faible sur une première plage de vitesses de véhicule plus élevées que sur la première plage de vitesses faibles de véhicule, et
l'unité de commande (5) est en outre configurée pour changer la vitesse de rotation par paliers ou en continu entre la première vitesse de rotation faible et la première vitesse de rotation élevée en réponse à un changement de vitesse du véhicule sur une première plage de vitesses intermédiaires de véhicule entre la première plage de vitesses faibles de véhicule et la première plage de vitesses élevées de véhicule.

2. Véhicule de travail électrique selon la revendication 1, dans lequel
la pluralité de modes de travail comporte un premier mode de travail, un deuxième mode de travail, un troisième mode de travail et un quatrième mode de travail, dans lequel l'au moins un mode de travail est le deuxième mode de travail, et dans lequel,
dans le premier mode de travail, l'unité de commande (5) est configurée pour maintenir la vitesse de rotation à une première vitesse de rotation constante en tant que vitesse faible sur une plage entière de vitesse du véhicule ;
dans le troisième mode de travail, l'unité de commande (5) est configurée pour maintenir la vitesse de rotation à une deuxième vitesse de rotation faible en tant que vitesse faible sur une deuxième plage de vitesses faibles de véhicule et à une deuxième vitesse de rotation élevée supérieure à la deuxième vitesse de rotation faible et la première vitesse de rotation élevée sur une deuxième plage de vitesses élevées de véhicule en tant que plage de vitesses de véhicule plus élevées que sur la deuxième plage de vitesses de véhicule faibles, et
est configurée pour changer la vitesse de rotation par paliers ou en continu entre la deuxième vitesse de rotation faible et la deuxième vitesse de rotation élevée en réponse à un changement de vitesse du véhicule sur une deuxième plage de vitesses intermédiaires de véhicule entre la deuxième plage de vitesses faibles de véhicule et la deuxième plage de vitesses élevées de véhicule ; et
dans le quatrième mode de travail, l'unité de commande (5) est configurée pour maintenir la vitesse de rotation à une deuxième vitesse de rotation constante égale ou supérieure à la deuxième vitesse de rotation élevée sur la plage entière de vitesse du véhicule.

3. Véhicule de travail électrique selon la revendication 2, dans lequel
dans l'un ou les deux du deuxième et du troisième modes de travail, l'unité de commande (5) est configurée pour changer en continu la vitesse de rotation de manière linéaire ou non-linéaire sur l'une ou les deux de la première et de la deuxième plages de vitesses intermédiaires de véhicule.

4. Véhicule de travail électrique selon la revendication 2, dans lequel
dans le deuxième et le troisième modes de travail, l'unité de commande (5) est configurée pour changer la vitesse de rotation avec une hystérésis dans au moins une portion du changement de vitesse de rotation sur la première et la deuxième plages de vitesses intermédiaires de véhicule.

5. Véhicule de travail électrique selon la revendication 2, dans lequel
la première plage de vitesses de véhicule faibles coïncide avec la deuxième plage de vitesses de véhicule faibles, et
la deuxième vitesse de rotation élevée est supérieure à la première vitesse de rotation élevée.

6. Véhicule de travail électrique selon l'une quelconque des revendications 1 à 5, comprenant en outre :
un détecteur de charge de travail (59) configuré pour détecter une charge de moteur sur le moteur électrique de travail (43), dans lequel
le détecteur de charge de travail (59) est configuré pour réduire l'une ou les deux de la vitesse de rotation et de la vitesse du véhicule en réponse à une augmentation de la charge de moteur au-delà d'une valeur prédéterminée.
